Europäisches Patentamt

**European Patent Office**

Office européen des brevets

(19)

(11) Numéro de publication: **0 186 529**
**B1**

(12) **FASCICULE DE BREVET EUROPEEN**

(45) Date de publication du fascicule du brevet:
**07.01.88**

(21) Numéro de dépôt: **85402080.7**

(22) Date de dépôt: **28.10.85**

(51) Int. Cl.⁴: **C 03 B 35/20, C 03 B 27/04**

(54) Cadre de soutien d'une feuille de verre pendant la trempe.

(30) Priorité: **29.10.84 FR 8416482**

(43) Date de publication de la demande:
**02.07.86 Bulletin 86/27**

(45) Mention de la délivrance du brevet:
**07.01.88 Bulletin 88/1**

(84) Etats contractants désignés:
**AT BE CH DE FR GB IT LI SE**

(56) Documents cités:
**US - A - 2 032 008**
**US - A - 3 973 943**

(73) Titulaire: **SAINT-GOBAIN VITRAGE, Les Miroirs 18, avenue d'Alsace, F-92400 Courbevoie (FR)**

(72) Inventeur: **Bartusel, Rudolf, An Der Haldmeisterhütte 9, D-5190 Stolberg (DE)**
Inventeur: **Diederen, Werner, Vogelsang 7, D-5120 Herzogenrath (DE)**
Inventeur: **Liepelt, Eberhard, Schützheide 29, D-5190 Stolberg (DE)**
Inventeur: **Linberg, Waldemar, Rodastrasse 7, D-5120 Herzogenrath (DE)**

(74) Mandataire: **Leconte, Jean-Gérard et al, Saint-Gobain Recherche 39, Quai Lucien Lefranc, F-93304 Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

L'invention concerne un cadre de soutien d'une feuille de verre échauffée jusqu'à sa température de trempe ou de déformation et en position horizontale pendant le soufflage de trempe. Le cadre a une forme adaptée au contour et à la forme de la feuille de verre qui repose sur des portées, disposées sur la face supérieure du cadre et entre lesquelles se forment des canaux d'évacuation de l'air de soufflage envoyé sur la face inférieure de la feuille de verre. Un tel cadre est défini dans le préambule de la revendication 1 et est connu, par exemple, du document US-A-3973943.

Différents modes de réalisation de tels cadres sont connus et ceux-ci sont utilisés couramment, suivant différents procédés pour la production de vitrages automobiles de sécurité bombés. Dans un mode de réalisation connu, les cadres sont formés de plats en métal, disposés de chant et munis sur leur surface porteuse de rainures formant des canaux d'évacuation. Selon un autre mode de réalisation connu, les cadres sont formés de plats disposés horizontalement, dont les surfaces planes correspondent à la forme de la feuille de verre et sont munis à leur surface, dirigés vers l'intérieur, de doigts saillants en position horizontale sur lesquels la feuille de verre repose.

Les canaux d'évacuation, formés entre le bord de la feuille de verre et le cadre, doivent présenter une section suffisante pour que soit assurée une trempe parfaite de toute la feuille de verre, même sur ses bords. D'autre part l'écartement entre les portées ne doit pas être très important car alors la pose sur différents points de la feuille de verre, se trouvant à sa température de déformation, conduit à une déformation gênante des zones marginales de la feuille de verre.

Les cadres connus ne permettent pas d'optimaliser les deux exigences d'une trempe parfaite des zones marginales de la feuille de verre et de l'évitement des déformations gênantes. C'est pourquoi, dans la pratique, le cadre est souvent recouvert d'un treillis métallique à mailles fines, de sorte que les points de contact de la feuille de verre avec le cadre sont multipliés et égalisés, et de plus on obtient une influence favorable pour l'évacuation de l'air de soufflage. Toutefois le recouvrement du cadre par un treillis conduit à d'autres inconvénients et a en particulier une influence défavorable sur la stabilité dimensionnelle de la surface porteuse du cadre.

L'invention a pour but de procurer un cadre de soutien, où d'une part sont évitées les déformations indésirables des zones marginales de la feuille de verre, occasionnées par les portées, et qui d'autre part conduit à une trempe suffisante et homogène de la feuille de verre, même sur ses zones marginales.

Selon l'invention, cela est obtenu par le fait que, au moins dans une zone choisie du cadre, vu en direction radiale, sont prévues plusieurs rangées de portées et que les canaux d'évacuation situés entre les portées forment un réseau continu.

Dans un mode de réalisation de l'invention, satisfaisant pour de nombreux cas, seulement une partie du cadre est équipée, à savoir la partie du cadre sur laquelle la bordure de la feuille de verre repose et où le exigences les plus fortes se posent relativement aux qualités optiques de la feuille de verre. Il peut s'agir par exemple du bord supérieur d'un vitrage automobile escamotable qui, n'étant pas maintenu par un encadrement, doit être jusqu'à l'arête exempt de déformation et de défauts optiques. Le bord inférieur du vitrage escamotable, étant lui invisible, pose avec une moindre sévérité ces exigences relatives à la qualité optique et aux déformations de la feuille de verre. Dans les cas où toute la périphérie de la feuille de verre reste visible après la mise en place de la feuille, il est recommandé d'utiliser un cadre selon l'invention entièrement équipé.

L'invention est basée sur la découverte que les déformations observées, ainsi que les défauts optiques des zones marginales de la feuille de verre sont non seulement dus à l'état de la surface de support du cadre — qui est d'ailleurs défavorablement influencée par le recouvrement usuel du cadre par un treillis métallique aisément déformable — mais aussi plus spécialement aux conditions d'évacuation de l'air entre la surface de pose et les bords de la feuille de verre. Selon l'invention d'une part il importe d'éviter des lames intercalaires, perméables à l'air, entre le cadre et la feuille de verre, qui peuvent se déformer de façon incontrôlée et transmettre leur déformation à la feuille de verre et d'autre part des mesures doivent être prises pour que l'évacuation du gaz de soufflage soit aussi homogène que possible entre le cadre et le bord de la feuille de verre.

L'invention peut être par exemple réalisée en disposant les portées les unes à côté des autres, en rangées successives, les unes derrière les autres, vues en direction radiale.

Il s'est avéré particulièrement avantageux que les portées soient disposées respectivement décalées les unes des autres dans des rangées successives, de sorte que l'on évite la formation de canaux d'évacuation s'écoulant en direction radiale. De cette manière on obtient, très efficacement, un refroidissement homogène de la zone marginale de la feuille de verre et on évite assurément un effet refroidissant alternant qui résulterait de façon inhérente d'un écoulement en direction radiale, c'est-à-dire lorsque les canaux d'évacuation s'écoulent entre des portées ininterrompues. Un tel effet refroidissant alternant localement conduit notamment à des degrés de trempe différents, ce qui entraîne les défauts optiques observés dans les zones marginales de la feuille de verre et qui selon l'invention sont au contraire très fortement réduits ou même totalement évités.

Selon un développement en pratique très avantageux de l'invention, le cadre vu en direction radiale, un certain nombre de portées sont disposées latéralement décalées les unes des autres, laissant entre elles des intervalles en forme de canaux, traversant le cadre obliquement et formant un réseau d'évacuation continu. Si, de par l'agencement des portées, se forment des directions préférentielles d'écoulement, c'est-à-dire des canaux préférés, les portées doivent être disposées, selon un développement préféré de l'invention, de telle sorte que ces directions préférentielles ne se développent pas en direction radiale mais sous un angle compris entre 30 et 60°, et de préférence d'environ 45°. En tout cas, les portées doivent être disposées de façon à représenter des obstacles à l'évacuation de gaz de soufflage de sorte que les courants de gaz sont contraints de se ramifier dans une pluralité de canaux croisés et de refroidir si possible uniformément la bordure de la feuille de verre.

Les portées doivent présenter une surface de pose suffisante pour le soutien de la feuille de verre et être disposées suivant un écartement tel qu'il permette une bonne évacuation du gaz de soufflage. De bons résultats sont en particulier obtenus lorsque la surface occupée par les intervalles entre les portées est égale ou jusqu'à 4 fois supérieure à la surface occupée par la surface de pose des portées.

Un mode de réalisation préféré de l'invention est détaillé dans la description suivante, à l'aide des figures qui représentent:

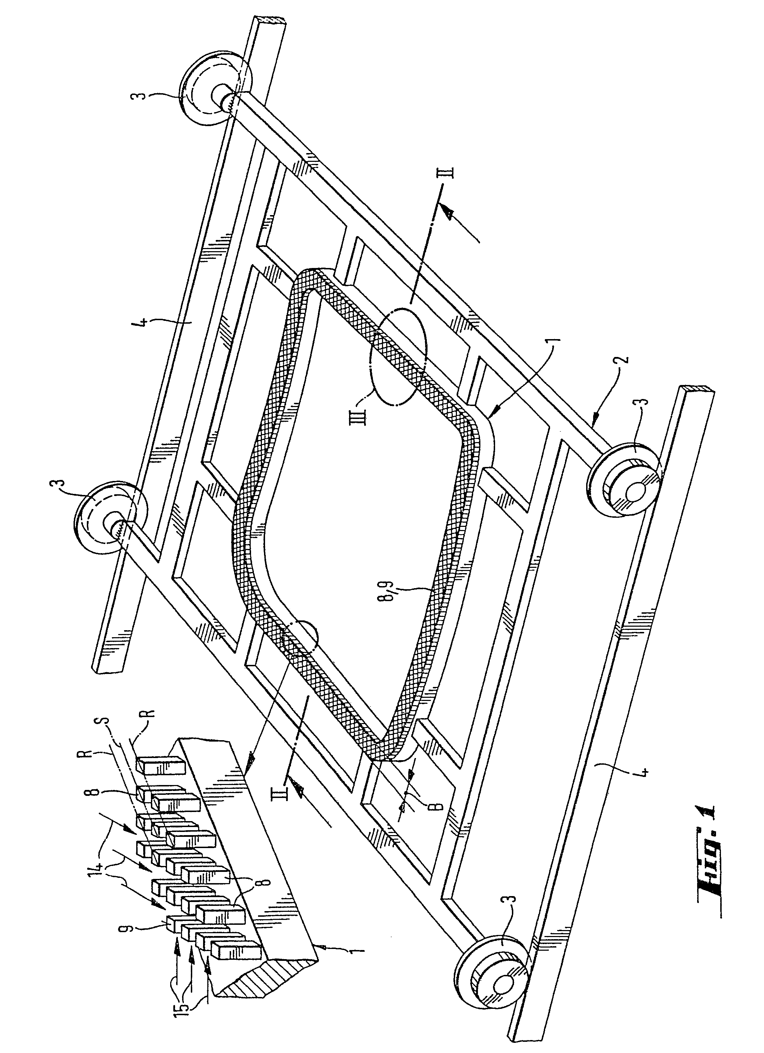

Fig. 1: un cadre monté sur un chariot mobile représenté en perspective.

Fig. 2: une coupe selon la ligne II-II du cadre représenté à la figure 1.

Fig. 3: une vue de dessus, à une plus grande échelle et suivant le secteur III, du cadre représenté à la figure 1.

Fig. 4: le cadre représenté à la figure 3 en coupe suivant la ligne IV-IV.

Les cadres selon l'art sont habituellement utilisés pour le transport de feuilles de verre bombées, directement du dispositif de bombage au dispositif de trempe qui comme tel comprend deux caissons de soufflage avec des buses ou ouvertures dirigées vers la feuille de verre et dans lequel est obtenu un refroidissement brusque de la feuille de verre dans le but de la trempe. Le cadre 1 est, par exemple, fixé d'une manière adéquate sur un chariot de transport 2. Ce dernier est muni de roues 3 qui permettent de le déplacer, sur les rails 4 qui relient la station de bombage à celle de trempe. Par des moyens de commande ici non représentés, le chariot de transport 2 est conduit du poste de bombage au poste de trempe, et de là au poste de déchargement dans lequel la feuille de verre trempée est retirée du cadre 1.

Le cadre 1 peut servir à la prise en charge de feuilles de verre préalablement bombées au moyen d'une presse de bombage ou tout autre moyen. Il peut aussi servir lui-même de forme de bombage, la feuille de verre étant soulevée avec ce cadre 1 et pressée contre une surface de bombage de forme correspondante à celle du cadre 1, ou encore échauffée jusqu'à sa température de bombage, encore plane, la feuille de verre étant lâchée (en position horizontale), sur le cadre 1 d'une hauteur adéquate. Ce dernier procédé de bombage est, comme les précédents, bien connu et usuel.

Enfin le cadre 1 peut aussi être utilisé pour transporter les feuilles de verre 6 pendant tout leur trajet à travers les fours d'échauffement et de bombage et la station de trempe qui s'y rapporte. En d'autres termes, le cadre selon l'invention est utilisable indépendamment du procédé de bombage appliqué et peut même l'être pour la trempe de feuilles de verre planes.

Le cadre 1 peut être fabriqué d'une seule pièce ou se composer de plusieurs segments assemblés en forme d'anneau fermé. Il s'agit d'une construction robuste, relativement massive afin de réduire, si ce n'est d'exclure totalement, le danger d'une déformation du cadre due aux contraintes thermiques ou mécaniques.

Le matériau utilisé pour la construction du cadre 1 doit se prêter à un travail précis avec l'outillage habituel afin d'obtenir avec haute précision la forme souhaitée de la surface porteuse. En outre pour certaines utilisations particulières du cadre, ce matériau doit présenter une conductivité thermique relativement faible, car des difficultés peuvent surgir avec des matériaux bons conducteurs de la chaleur dans le cas où la feuille de verre, fortement échauffée, est posée sur un cadre, porté à une température relativement basse. Conviennent alors les matériaux-céramiques, pouvant se travailler avec des machines-outils d'usinage, ainsi que les alliages de fer ou les aciers spéciaux à faible conductibilité thermique et à faible coefficient de diffusité tel que l'acier réfractaire Fluginox N42 (marque déposée).

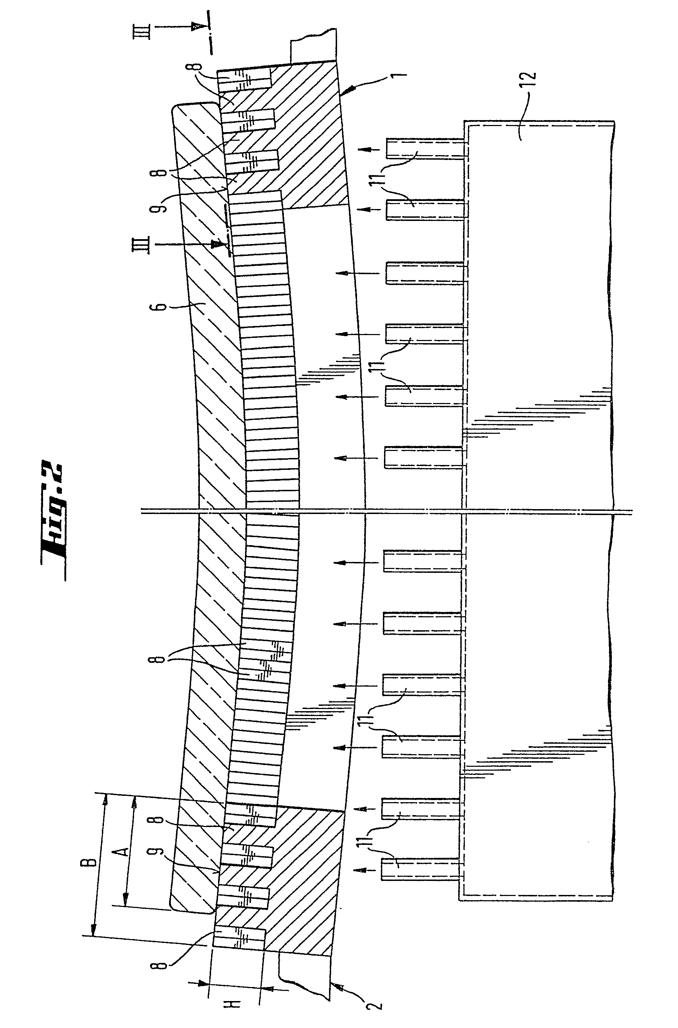

Sur la surface supérieure du cadre 1, suivant un agencement régulier et dense, est disposée une pluralité de portées (8), dirigées vers le haut verticalement et dont les surfaces supérieures forment en commun la surface de pose de la bordure de la feuille de verre (6). Dans la plupart des cas il est suffisant que la feuille de verre (6) ne repose sur les portées (8) que le long d'une bordure, sur une largeur A d'environ 10 à 15 mm. La largeur B de la partie portante du cadre 1, formée par l'ensemble des portées 8, est, d'une manière appropriée, un peu plus importante que la largeur A recouverte par la feuille de verre. Les portées 8 ont une hauteur H comprise entre 2 et 10 mm et dans les intervalles entre les portées se forme un réseau de canaux à travers lequel s'évacue l'air de refroidissement dirigé vers la surface inférieure de la feuille de verre et provenant des buses de soufflage 1 du caisson inférieur 12, comme l'illustre en particulier la figure 2.

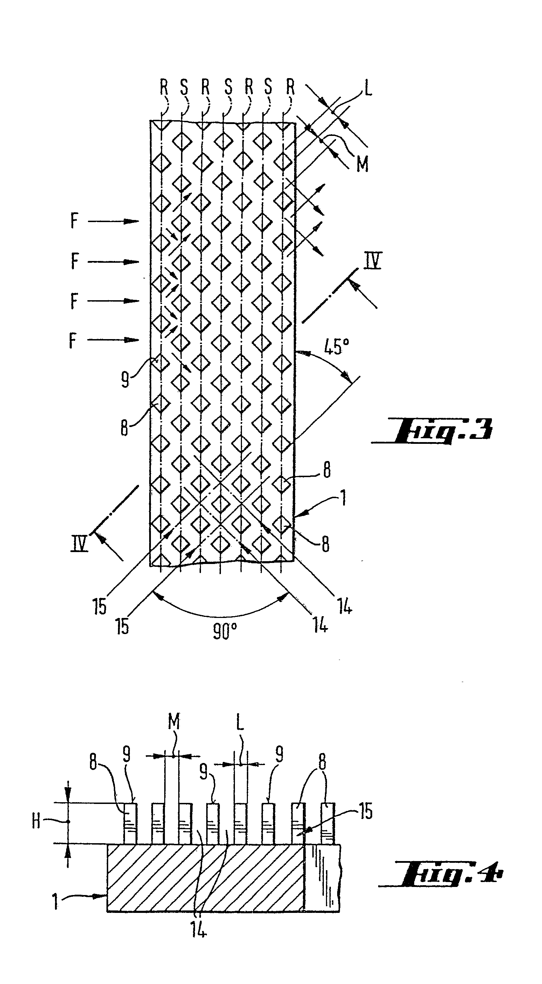

Comme il ressort en détail sur les figures 3 et 4, afin d'obtenir un refroidissement si possible homogène des bords de la feuille dans la zone de pose les rangées R et S de portées 8 sont disposées l'une derrière l'autre dans la direction du courant d'air (flèche F) et de plus leur positionnement est tel que chaque portée (8) de la rangée S soit dans le prolongement d'une lacune entre deux portées de la rangée R. De cette manière, en s'évacuant dans la direction de la flèche F selon la direction d'écoulement radiale originale, l'air rencontre des obstacles qui le contraignent à s'écouler au travers du réseau de canaux, dans les canaux 14, 15 qui se croisent à angle droit, avec à chaque embranchement une distribution constante de l'air. Les canaux 14, 15 passent sous un angle d'environ 45° par rapport à la section correspondante de cadre.

De bons résultats sont obtenus lorsque les portées présentent une hauteur H comprise entre 2 et 6 mm et une section approximativement carrée de l'ordre de 2 à 10 mm² et de préférence de 3 à 6 mm² soit par exemple avec une valeur L de côté d'environ 2 mm, alors que la largeur M des canaux 14, 15, entre les portées, est de même de l'ordre de 2 mm. De cette manière on a un réseau de canaux d'écoulement, où le volume occupé par les portées totalise ⅓ du volume occupé par les canaux d'écoulement. Ainsi on obtient simultanément une surface de pose suffisante pour la feuille de verre et des canaux de sections suffisantes pour une bonne évacuation des gaz de soufflage.

Comme déjà mentionné, les matériaux de construction du cadre qui conviennent sont les composés céramiques ou métalliques usinables avec les machines-outils usuelles. Les canaux 14, 15 seront par exemple obtenus par fraisage à l'aide d'une fraiseuse adéquate.

Si le cadre est utilisé pour un procédé selon lequel la feuille de verre, échauffée jusqu'à sa température de bombage, est amenée au contact du cadre se trouvant à relativement basse température, alors il faut choisir un matériau adéquat, présentant une faible conductibilité thermique, ce qui évite un trop fort refroidissement de la feuille de verre lors du contact avec le cadre, refroidissement qui pourrait entraîner la casse de la feuille de verre. Si le matériau choisi présente une conductibilité thermique relativement élevée, il est recommandé de munir la surface de pose des portées d'un revêtement en céramique, obtenu par exemple au moyen du procédé connu de pulvérisation à la torche à plasma. Une autre solution consiste dans le choix pour la fabrication de tout le cadre d'un composé métallique présentant une relativement faible conductibilité thermique, comme par exemple un alliage d'acier spécial, ou d'un composé céramique adéquat. Enfin il est aussi possible d'utiliser comme portées des chevilles en céramique qui sont placées dans des perforations prévues dans un corps de cadre métallique.

## Revendications

1. Cadre (1) de soutien d'une feuille de verre (6), échauffée jusqu'à sa température de trempe ou de déformation et en position horizontale pendant le soufflage de trempe, ayant une forme adaptée au contour et à la forme de la feuille de verre et sur la face supérieure duquel sont disposées des portées (8) supportant la feuille de verre et entre lesquelles se forment des canaux d'évacuation (14, 15) de l'air de soufflage envoyé sur la face inférieure de la feuille de verre, caractérisé en ce que, au moins dans une zone choisie du cadre (1), vu en direction radiale, sont prévues plusieurs rangées de portées (8) et que les canaux d'évacuation (14, 15) situés entre ces portées forment un réseau continu.

2. Cadre (1) selon la revendication 1, caractérisé en ce que les portées (8) sont disposées en différentes rangées successives les unes derrière les autres vues en direction radiale.

3. Cadre (1) selon la revendication 1, caractérisé en ce que les portées (8) sont disposées en rangées consécutives (R, S) respectivement décalées les unes des autres de sorte que l'on évite la formation de canaux d'évacuation s'écoulant en direction radiale.

4. Cadre (1) selon la revendication 3, caractérisé en ce que les canaux d'évacuation (14, 15), en réseau continu, s'écoulent sous un angle d'environ 30 à 60° par rapport à la direction tangentielle du cadre ou de la direction de la section du cadre mentionné.

5. Cadre (1) selon une des revendications de 1 à 4, caractérisé en ce que les portées (8) ont une surface de pose plane ou sensiblement plane, de 2 à 10 mm² et de préférence de 3 à 6 mm².

6. Cadre (1) selon une des revendications 1 à 5, caractérisé en ce que le rapport de la surface totale de pose formée par les portées (8) à la surface formée par les canaux d'évacuation en réseau est compris entre 1/1 et 1/4.

7. Cadre (1) selon une des revendications de 1 à 6, caractérisé en ce que la hauteur des portées (8) s'élève entre 2 et 6 mm.

8. Cadre (1) selon une des revendications 1 à 7, caractérisé en ce que au moins les portées (8) du cadre-support sont constituées d'un matériau ayant une relativement basse conductivité thermique et à bas coefficient de diffusivité.

9. Cadre (1) selon une des revendications de 1 à 7, caractérisé en ce que le cadre, y compris les supports (8), est constitué en métal ayant une relativement haute conductivité thermique et que la surface de pose (9) des portées (8) est recouverte d'un matériau ayant une relativement faible conductivité thermique.

10. Cadre (1) selon la revendication 9, caractérisé en ce que les portées (8) sont munies d'un revêtement de céramique.

## Patentansprüche

1. Tragring (1) zum Unterstützen einer auf ihre Vorspann- oder Verformungstemperatur erhitzten Glasscheibe (6) in horizontaler Lage beim Abblasen der Glasscheibe zum Zwecke des Vorspannens, mit einer dem Umriss und der Form der Glasscheibe angepassten Form und mit auf der Oberseite de Tragrings angeordneten, die Glasscheibe tragenden Vorsprüngen (8), zwischen denen Abstromkanäle (14, 15) für die gegen die Unterseite der Glasscheibe gerichtete Blasluft gebildet sind, dadurch gekennzeichnet, dass wenigstens in einem ausgewählten Bereich des Tragrings (1) in radialer Richtung gesehen mehrere Reihen tragender Vorsprünge (8) vorgesehen sind und dass die zwischen den Vorsprüngen (8) liegenden Abströmkanäle (14, 15) ein zusammenhängendes Netzwerk bilden.

2. Tragring (1) nach Anspruch 1, dadurch gekennzeichnet, dass die Vorsprünge (8) in den verschiedenen Reihen in radialer Richtung gesehen hintereinander angeordnet sind.

3. Tragring (1) nach Anspruch 1, dadurch gekennzeichnet, dass die Vorsprünge (8) in aufeinanderfolgenden Reihen (R, S) jeweils zueinander versetzt angeordnet sind derart, dass die Bildung von in radialer Richtung durchgehenden Abströmkanälen verhindert wird.

4. Tragring (1) nach Anspruch 2, dadurch gekennzeichnet, dass die netzwerkartig zusammenhängenden Abströmkanäle (14, 15) unter einem Winkel von etwa 30 bis 60 Grad zur tangentialen Richtung des Tragrings oder zur Richtung des betreffenden Tragringabschnitts verlaufen.

5. Tragring (1) nach einem der Ansprüche 1 bis 4, dadurch gekennzeichnet, dass die tragenden Vorsprünge (8) eine ebene oder im wesentlichen ebene Auflagefläche von 2 bis 10 mm², vorzugsweise von 3 bis 6 mm², aufweisen.

6. Tragring (1) nach einem der Ansprüche 1 bis 5, dadurch gekennzeichnet, dass das Verhältnis der durch die Vorsprünge (8) gebildeten gesamten Auflagefläche zu der durch die netzwerkartigen Abströmkanäle gebildeten Fläche zwischen 1/1 und 1/4 beträgt.

7. Tragring (1) nach einem der Ansprüche 1 bis 6, dadurch gekennzeichnet, dass die Höhe der Vorsprünge (8) 2 bis 6 mm beträgt.

8. Tragring (1) nach einem der Ansprüche 1 bis 7, dadurch gekennzeichnet, dass wenigstens die tragenden Vorsprünge (8) des Tragrahmens aus einem Material mit verhältnismässig geringer Wärmeleitfähigkeit und geringer Wärmeleitzahl bestehen.

9. Tragring (1) nach einem der Ansprüche 1 bis 7, dadurch gekennzeichnet, dass der Tragring einschliesslich der tragenden Vorsprünge (8) aus Metall mit verhältnismässig hoher Wärmeleitfähigkeit besteht, und dass die Auflagefläche (9) der tragenden Vorsprünge (8) mit einem Material mit verhältnismässig geringer Wärmeleitfähigkeit beschichtet ist.

10. Tragring (1) nach Anspruch 9, dadurch gekennzeichnet, dass die tragenden Vorsprünge (8) mit einem keramischen Überzug versehen sind.


**Claims**

1. A frame (1) for holding a glass sheet (6) heated to its tempering or deformation temperature and in a horizontal position during blowing to carry out tempering, having a shape adapted to the contour and shape of the glass sheet and on the upper surface of which are arranged supports (8) supporting the glass sheet and between which there are formed channels (14, 15) for evacuating blown air brought to the lower surface of the glass sheet, characterised in that in at least a selected zone of the frame (1), viewed in the radial direction, there are provided a plurality of rows of supports (8) and in that the evacuation channels (14, 15) situated between these supports form a continuous network.

2. A frame (1) according to Claim 1, characterised in that the supports (8) are arranged in different successive rows, one behind the others viewed in the radial direction.

3. A frame (1) according to Claim 1, characterised in that the supports (8) are arranged in consecutive rows (R, S) respectively offset from each other so that formation of evacuation channels running in the radial direction is avoided.

4. A frame (1) according to Claim 3, characterised in that the evacuation channels (14, 15) forming a continuous network extend at an angle of about 30 to 60° from the tangential direction of the frame or the direction of the cross-section of said frame.

5. A frame (1) according to one of Claims 1 to 4, characterised in that the supports (8) each have a flat or substantially flat supporting surface of from 2 to 10 mm², preferably 3 to 6 mm², area.

6. A frame (1) according to any one of Claims 1 to 5, characterised in that the ratio of the total support surface area formed by the supports (8) to the surface area formed by the evacuation channels of the network is from 1/1 to 1/4.

7. A frame (1) according to any one of Claims 1 to 6, characterised in that the height of the supports (8) is from 2 to 6 mm.

8. A frame (1) according to any one of Claims 1 to 7, characterised in that at least the supports (8) of the support frame are formed of a material having a relatively low thermal conductivity and a low coefficient of diffusion.

9. A frame (1) according to any one of Claims 1 to 7, characterised in that the frame including the supports (8) is formed of a metal having a relatively high thermal conductivity and in the supporting surfaces of the supports (8) are covered with a material having a relatively low thermal conductivity.

10. A frame (1) according to Claim 9, characterised in that the supports (8) are provided with a ceramic coating.

Fig. 1

0 186 529

Fig.2

0 186 529

R S R S R S R    L

F →

F →

F →

F →

9

8

8

1

8

IV

M

45°

IV

15

15

90°

14

14

*Fig. 3*

M    L

8    9    9    9    8

H

15

1

14

*Fig. 4*